# EUROPEAN PATENT SPECIFICATION

(11) **EP 2 272 027 B1**
(45) Date of publication and mention of the grant of the patent: **26.03.2014**
(21) Application number: 09732913.0
(22) Date of filing: 07.04.2009
(51) Int. Cl.: G01J 3/36, G06K 9/00, G06T 7/40, G08G 5/00, G08G 5/02, H04N 5/235, H04N 5/33

(54) **MULTISPECTRAL ENHANCED VISION SYSTEM AND METHOD FOR AIRCRAFT LANDING IN INCLEMENT WEATHER CONDITIONS**
MULTISPEKTRALES ERWEITERTES VISION-SYSTEM UND VERFAHREN FÜR IN UNGÜNSTIGEN WETTERVERHÄLTNISSEN LANDENDE FLUGZEUGE
SYSTÈME DE VISION OPTIMISÉ MULTISPECTRAL ET PROCÉDÉ D ATTERRISSAGE D AÉRONEF DANS DES CONDITIONS MÉTÉOROLOGIQUES NON FAVORABLES

(30) Priority: 16.04.2008 US 45460 P
(43) Date of publication of application: 12.01.2011
(73) Proprietor: Elbit Systems Ltd., 31053 Haifa (IL)
(72) Inventor: SCHNEIDER, Ron, 37787 Haifa (IL); DAVID, Ofer, 34756 Haifa (IL); YAHAV, Dror, 44209 Kfar Saba (IL)
(74) Representative: Nederlandsch Octrooibureau
(86) International application number: PCT/IL2009/000390
(87) International publication number: WO 2009/128065

(56) References cited:
- WO-A-00/02156
- WO-A-2006/070351
- US-A- 6 119 055
- US-A1- 2005 232 512

## Description

### FIELD OF THE DISCLOSED TECHNIQUE

The disclosed technique relates to enhanced vision systems, in general, and to a multispectral enhanced vision system and method for assisting a pilot of an aircraft during inclement weather conditions, in particular.

### BACKGROUND OF THE DISCLOSED TECHNIQUE

Enhanced vision systems (EVS) operational on aircraft are used to enhance the ability of the pilot of the aircraft to decent toward landing, decrease landing minima, and as well as to improve the flight safety, especially during adverse weather conditions, by enhancing the situational awareness of the pilot. Such systems typically employ a variety of imaging technologies, functioning on diverse ranges of wavelengths of the electromagnetic (EM) spectrum. For example, forward looking infrared (FLIR) is based on sensing infrared (IR) radiation, while radar is based on sensing microwave or radio wave radiation, and night vision devices (NVD) that amplify moonlight and starlight are based on sensing EM radiation in the visible part of the EM spectrum. Certain imaging technologies are more effective than others in providing improved imagery in different types of low visibility weather conditions. For example, FLIR is better suited for imaging through environmental obscurations resulting from haze than the above mentioned NVD. Furthermore, EVS typically employ multi-spectral image fusion, which combines images acquired from different spectral imaging sources into a single image. EVS and methods are known in the art.

U.S. Patent No.: 6,119,055 issued to Richman, entitled "Real Time Imaging System and Method for Use in Aiding a Landing Operation of an Aircraft in Obscured Weather Conditions" is directed to an apparatus and method for increasing the runway visual range of a pilot of an aircraft during the landing of the aircraft in inclement weather conditions that impair the view of the runway by the pilot. The apparatus includes a plurality of light emitting diode (LED) assemblies disposed on opposite sides of the runway, a radio frequency (RF) transmitter disposed on a tower near the end of the runway, and an imaging system, carried on board the aircraft. Each of the LED assemblies includes a plurality of LEDs, a current driver circuit, and a RF receiver. The imaging system includes an RF receiver, a processor, a camera, and a display. The RF transmitter transmits RF signals (i.e., synchronizing signals) to the RF receivers of each LED assembly, causing each corresponding driver circuit to energize the respective LEDs intermittently, at predetermined time durations. As the aircraft approaches the runway, the RF transmitter transmits the synchronization signals to the RF receiver of the imaging system. The camera and the LEDs are synchronized with the synchronization signals transmitted by the RF transmitter. The camera takes pairs of frames. The first frame includes radiant energy from the LEDs as well as radiant background energy from various sources besides the LEDs (e.g., arc lamps, and other lights sources on the ground). The camera takes the second frame when the LEDs are turned off. The processor receives the frames captured by the camera and subtracts (i.e., pixel by pixel) the digital information of the second frame from the digital information of the first frame. The display displays the resulting filtered images.

U.S. Patent Application Publication No.: US 2005/0232512 A1 by Luk et al., entitled "Neural Net Based Processor for Synthetic Vision Fusion" is directed to a synthetic vision fused integrated enhanced vision system (SVF IEVS) employing neural network processing. The system includes a sensor array, an association engine (AE), a database, and a head-up display and/or a head-down display (HUD/HDD). The AE includes a feature extraction mechanism, a registration mechanism, a memory, and an associative match mechanism. The associative match mechanism includes a best match processor (BMP), and an exact match processor (EMP). The sensor array includes a short wave infrared (SWIR) sensor, a long wave infrared (LWIR) sensor, and a millimeter wave (MMW) sensor, which are all connected to the AE. The LWIR sensor detects the thermal background, the SWIR sensor detects the runway lights, and the MMW sensor detects terrain background (i.e., by penetrating obscurations such as fog, and low clouds). The database stores a plurality of images of an objective (i.e., an approach to a runway). The database generates a plurality of training vectors (i.e., during a flight simulation or during multiple clear-weather approach flights), which create weights to be utilized by the BMP and EMP.

When the aircraft is landing in high visibility conditions, the feature extraction mechanism extracts features from the images that are captured by each of the sensors and generates the fused feature image of the objective, which is stored in the memory of the AE as a template vector. During system operation (e.g., in low visibility weather conditions) the registration mechanism compares the fused feature image with a database of expected features of the objective and provides registered sensor output vectors. The associative match mechanism compares the registered sensor output vectors with the database of images of the objective and generates comparison vectors for selecting an objective image for display. In particular, the BMP finds a best match by performing a comparison between the feature images with the database (i.e., training) images and generates an output vector, which is, in turn, input to the EMP. The EMP produces a pointer to the database of images, and a selected image is displayed on the HUD/HDD.

U.S. Patent Application No.: US 2007/0075244 A1 by Kerr, entitled "Enhanced Vision System Sensitive to Infrared Radiation" is directed to an enhanced vision system for use in the piloting of aircraft. The enhanced vision system includes a multi-detector head, a computer, and a display, which are all mounted in a forward section of an aircraft. Multi-detector head includes an electric light source imager, an ambient background scene imager, and a visible light imager. The multi-detector head and the display are connected with the computer. The ambient background scene imager includes an LWIR detector, and the visible light imager includes a charged-coupled device (CCD). The electric light source imager includes a spectral filter assembly, and an SWIR detector.

The electric light source imager and the ambient background scene imager are combined in an optical system that includes an optical lens, a dichoic beam splitter, a controlable iris, and a filter assembly. The electric light source imager senses infrared electromagnetic radiation from electric sources with the SWIR detector, and generates a video signal. The spectral filter assembly limits the radiation that is sensed by the SWIR detector. The ambient background scene imager senses infrared radiation from a background scene and also generates a video signal. The visible light imager senses visible light by the CCD, and generates an output signal, which is directed to the computer for processing. The visible light imager is used to verify whether the pilot is able to view the background scene without the enhanced vision provided by the electric light source imager and the ambient background scene imager. The computer combines the video signals generated by the electric light source imager and ambient background scene imager, by infrared image fusion to produce a fused image signal. The display displays the fused image signal.

U.S. Patent No.: 5,719,567 issued to Norris, and entitled "System for Enhanced Navigation and Surveillance in Low Visibility Conditions" is directed to a system for enhancing navigation and for providing the location of relevant objects, such as runway lights, in low visibility weather conditions. The system includes a plurality of ultraviolet radiation sources, a receiver, and a display. Each ultraviolet radiation source includes an ultraviolet lamp, beam forming optics, and a modulator. The ultraviolet lamps emit radiation in the ultraviolet part of the electromagnetic spectrum corresponding to a wavelength region of between -0.205 µm to 0.275 µm. The sources are positioned at or near visible beacons (i.e., runway lights). Each modulator in the ultraviolet radiation sources modulates the radiation generated by the ultraviolet lamps to form a recurring characteristic radiation pattern. The beam forming optics direct the ultraviolet radiation to within a particular solid angle of illumination. The ultraviolet radiation emanates from the ultraviolet radiation sources, propagates through low a visibility atmosphere, and is then received by the receiver, which is positioned on a vehicle, an aircraft, or a control tower.

The receiver includes a lens, an optical filter, an imaging tube, and a signal processor. The optical filter is a bandpass filter that allows through radiation having wavelengths of between 0.205 µm and 0.275 µm. The imaging tube is a "solar blind" micro-channel plate photomultiplier tube (MCP), which detects a radiant image by counting individual photons (emitted by the ultraviolet radiation sources) and registering their spatial relationship. Signal processor processes the images from the imaging tube, discerning between different kinds of modulated and unmodulated signals, and filters out undesirable unmodulated signals corresponding to signal sources such as those generated by street lamps. The receiver produces an image or representation of the received radiation, which is passed to the display. The display displays the image superimposed on a real-scene visible image.

PCT International Publication Number WO 2006/070351 A2 by Shamir et al., entitled "Color Night Vision" is directed to a system and method for producing a color image in nighttime and in low light conditions. The color night vision system includes a spectral band filtering element, an image intensifier, an image detector, a database of common spectral signatures, a processor, and an image display. The image intensifier includes a detecting element a micro channel plate (MCP) and a phosphor screen.

The filtering element is used to extract the spectral signatures of each area in an image. The detecting element converts photons, received from a low light level illuminated image, into electrons. The MCP multiplies these electrons via an electric field applied between its plates. The multiplied electrons collide with the phosphor screen causing the emission of a pattern of bright spots that correlate to an intensified version of the input image of the detecting element. The image detector captures each intensified input image and sends image information of the intensified input image to the processor. The processor receives spectral duplications of images associated with each one in a plurality of spectral bands. The processor extracts the signature of each pixel in the intensified image for matching with at least one signature contained in the database of predetermined spectral signatures. Signatures in the database have colors associated therewith, which are used by the processor to generate a color image of the captured scene and to be displayed on the image display.

PCT International Publication Number WO 00/02156 by Burman, entitled "Non-Literal Pattern Recognition Method and System for Hyperspectral Imagery Exploitation" is directed to a system and method for identifying materials present in a pixel of a multispectral and hyperspectral image. The system includes an input processing section, a training data input section, a material categorization section and a spectral unmixing section. The input processing section includes an image sensor, a pixel extraction section and a signature processing section.

The image sensor is an optical detection device that scans an object to produce an image set that defines the optical characteristics of the object. The pixel extraction section extracts the spectral signature from a single pixel in the image set. Data in a single pixel consists of a number of data samples, where each data sample corresponds to the reflectance or emission of photons from the object at a particular spectral frequency. This data from the single pixel is inputted to the processing section for signal filtering and normalization, after which a pixel signature is forwarded to the material categorization section. The material categorization section identifies categories that are combinations of material signatures of interests related to the sensed data from the image sensor. An artificial neural network in the training data input section is trained to identify categories that have a degree of correlation with the input signature. The spectral unmixing section then employs a genetic algorithm that solves a constrained spectral mixing equation so as to detect and estimate the abundance of constituent materials that comprise the input signature. An estimated abundance for each material signatures of interest gives an indication of what materials are present in the input signature.

### SUMMARY OF THE PRESENT DISCLOSED TECHNIQUE

It is an object of the disclosed technique to provide a novel apparatus and method for detecting airfield light emitters, which overcomes the disadvantages of the prior art. In accordance with the disclosed technique, there is thus provided an apparatus for detecting EM radiations emitted by airfield light emitters. The apparatus includes at least one light detection camera and a processor. Each light detection camera is coupled with the processor. At least one of the light detection cameras detects a plurality of respective wavebands of EM radiation within the EM spectrum. The light detection cameras produce respective spectral images. The processor produces a multispectral image of the airfield light emitters form the spectral images. The multispectral image includes a multi-dimensional set of spectral values. The processor further determines which combination in the multi-dimensional set of spectral values corresponds with a plurality of distinct light emission characteristics of the airfield light emitters, by identifying a particular spectral signature corresponding to the multi-dimensional set of spectral values. The processor produces an enhanced image from those spectral values of the multi-dimensional set of spectral values which correspond to the determined combination.

According to another aspect of the disclosed technique, there is thus provided a method for detecting airfield light emitters. The airfield light emitters have respective light emission characteristics. The method includes the procedures of acquiring a plurality of spectral images from EM radiation emitted from the airfield light emitters in a plurality of wavebands within the EM spectrum, generating a multispectral image of the airfield light emitters from the spectral images, and identifying a particular spectral signature of the airfield light emitters. Each spectral image corresponds to a particular one of the plurality of wavebands. The multispectral image includes a multi-dimensional set of spectral values. The particular spectral signatures of the airfield light emitters are identified from a combination of spectral values in the multi-dimensional set of spectral values corresponding to the respective light emission characteristics.

### BRIEF DESCRIPTION OF THE DRAWINGS

The disclosed technique will be understood and appreciated more fully from the following detailed description taken in conjunction with the drawings in which:
Figure 1 is a schematic block diagram of a system, constructed and operative in accordance with an embodiment of the disclosed technique;
Figure 2 illustrates a plurality of schematic plots, each depicting the spectral characteristics of different types of airfield light emitters within different types of atmospheric media;
Figure 3 is a schematic diagram representing a spectral signature detection scheme based on a plurality of detectors, illustrating the dependency on particular atmospheric media;
Figure 4 is a schematic block diagram illustrating the generation of an enhanced multi-spectral image; and
Figure 5 is a schematic illustration of a method for detecting different types of airfield radiation emitters within different types of atmospheric media.

### DETAILED DESCRIPTION OF THE EMBODIMENTS

The disclosed technique overcomes the disadvantages of the prior art by providing a system and method for identifying environmentally modified spectral signatures of various types of airfield light emitters, using the combined operation of multiple waveband cameras to produce a multispectral image. Spectral values in a datacube of the multi-spectral image are analyzed to identify environmentally modified spectral signatures of known types of airfield radiation emitters (e.g., runway lights) within various types of atmospheric media (e.g., haze, clouds, fog).

A processor detects the environmentally modified spectral signatures present in the datacube corresponding to particular pixels in the multispectral image and compares them to corresponding spectral signatures stored in a database. The processor selects which particular features within the multispectral image are used to produce an enhanced image of the detected airfield radiation emitters. The processor fuses the multispectral image with a hyper-range image, acquired by a hyper-range camera, to produce a fused image. The fused image is presented to the pilot.

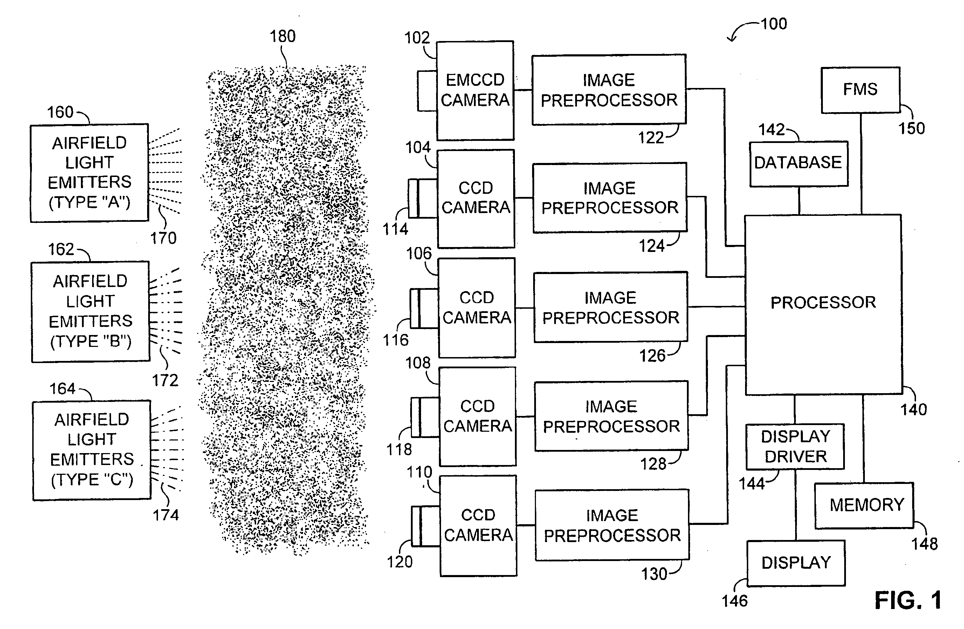

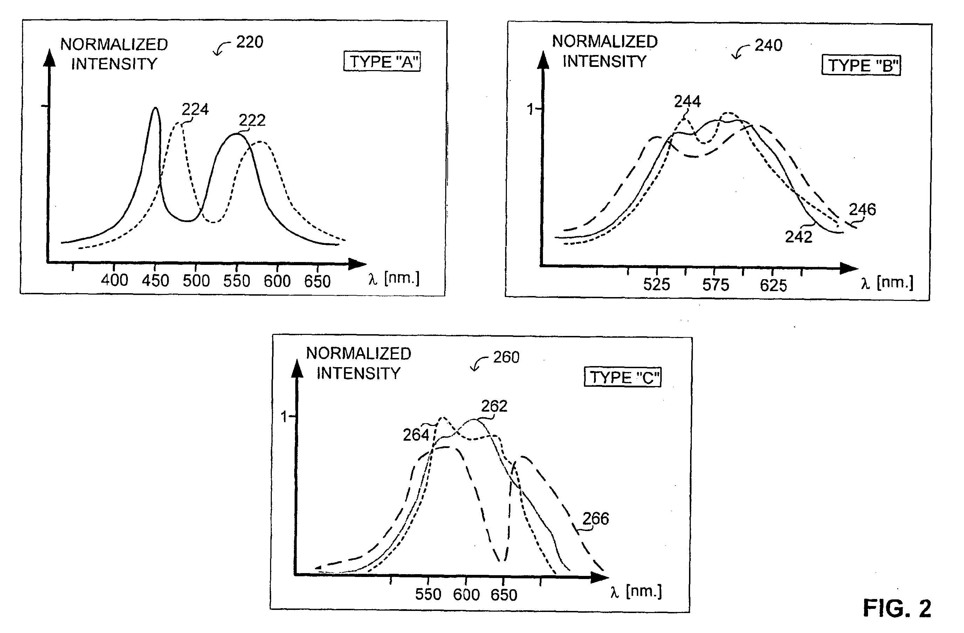

The terms "spectral band" and "waveband" are used herein interchangeably, and refer to a range or portion of the EM spectrum. Reference is now made to Figures 1 and 2. Figure 1 is a schematic illustration of a system, generally referenced 100, constructed and operative in accordance with an embodiment of the disclosed technique. Figure 2 illustrates a plurality of schematic plots, each depicting the spectral characteristics of different types of airfield light emitters within different types of atmospheric media. System 100 (Figure 1) is typically mounted within a cockpit (not shown) of an aircraft and includes an electron-multiplying charge-coupled device (EMCCD) camera 102, a plurality of charge-coupled device cameras, CCD camera 104, CCD camera 106, CCD camera 108, and CCD camera 110. The system further includes a plurality optical spectral filters 114, 116, 118, and 120, a plurality of image preprocessors 122, 124, 126, 128, and 130, a processor 140, a database 142, a display driver 144, a display 146, and a memory 148. Each camera (i.e., except for EMCCD camera 102) is optically coupled with its respective optical spectral filter and electronically coupled with its respective image preprocessor. Specifically, EMCCD camera 102 is electronically coupled with image preprocessor 122, CCD camera 104 is optically coupled with optical spectral filter 114, and electronically coupled with image preprocessor 124. CCD camera 106 is optically coupled with optical spectral filter 116 and electronically coupled with image preprocessor 126. CCD camera 108 is optically coupled optical spectral filter 118 and electronically coupled with image preprocessor 128, and CCD camera 110 is optically coupled optical spectral filter 120 and electronically coupled with image preprocessor 130. Each one of the cameras, coupled with its respective image preprocessor, represents a "channel". Processor 140 is coupled with image preprocessors 122, 124, 126, 128, and 130, database 142, display driver 144, memory 148, and with a flight management system (FMS) 150 of the aircraft. Display driver 144 is coupled with display 146. The cameras are mounted within the cockpit of the aircraft (not shown) at such positions as to enable the visualization of airfield runways during the approach to landing of the aircraft.

Different airport runways may employ different types of runway lighting systems. Figure 1 illustrates three types of airfield light emitters each of different type, airfield light emitters 160 of type "A", airfield light emitters 162 of type "B", airfield light emitters 164 of type "C". Airfield light emitters 160, 162, and 164 are employed as airfield runway edge lights, typically located along the length of the runways of airports. Alternatively, airfield light emitters 160, 162, and 164 can also be runway centerline lights, visual approach slope indicator (VASI) lights, precision approach path indicator (PAPI) lights, runway end identifier lights (REIL), touchdown zone lights (TDZL), and the like. Airfield light emitters 160 emit EM radiation 170, airfield light emitters 162 emit EM radiation 172, and airfield light emitters 164 emit EM radiation 174.

Each type of airfield light emitter emits EM radiation (e.g., visible light, infrared light, ultraviolet light) over a plurality of distinct spectral bands (i.e., possesses particular spectral emission characteristics). With reference to Figure 2, a plurality of schematic plots are depicted, each of which illustrate the spectral characteristics of a particular type of airfield light emitter within different types of atmospheric media. In particular, schematic plot 220 corresponds to that of airfield light emitters 160 of type "A", schematic plot 240 corresponds to that of airfield light emitters 162 of type "B", and schematic plot 260 corresponds to that of airfield light emitters 164 of type "C". The axis of the abscissas of each of schematic plots 220, 240, and 260 represents the wavelength of the spectral emission in units of nanometers. The axis of ordinates of each of schematic plots 220, 240, and 260 represents the normalized intensity of the respective spectral emissions.

Airfield light emitters 160 of type "A" are selected to be of white light emitting diode (LED) type. The spectral emission characteristics associated with EM radiation 170 are represented by spectral emission characteristic 222, indicated by a solid continuous line in schematic plot 220. Airfield light emitters 162 of type "B" of are selected to be of incandescent type. The spectral emission characteristics associated with EM radiation 172 are represented by spectral emission characteristic 242, indicated by a solid continuous line in schematic plot 240. Airfield light emitters 164 of type "C" are selected to be of halogen incandescent type. The spectral emission characteristics associated with EM radiation 174 are represented by spectral emission characteristic 262, indicated by a solid continuous line in schematic plot 260. The above selection corresponds to the three typical types of airfield light emitters that are utilized, it is stressed, however, that the disclosed technique is not bound nor limited to a particular type of airfield light emitter, and the above selection is made for the purposes of elucidating the disclosed technique through the use of example. Other types of airfield light emitters include, for example, those of gas discharge type, arc type, laser type, sulfur type, metal halide type, and the like.

When an aircraft employing system 100 approaches a runway for landing (not shown), airfield light emitters 160, 162, and 164, and the aircraft are in an environment which is surrounded by an atmospheric medium 180, such as air. Figure 1 illustrates a simplified representation of atmospheric medium 180, through which EM radiations 170, 172, and 174 propagate. Atmospheric medium 180 and the optical characteristics thereof (e.g., transmissivity, reflectivity) are dependent on the specific environmental conditions. Atmospheric medium 180 can be, for example, atmospheric dust, rain drops, ice crystals, snow crystals, smog, haze, water clouds and fogs, condensation nuclei, hailstones, a variety of pollens, drizzle, sea salt nuclei, oil smokes, and the like. It is noted that atmospheric medium 180 can inherently ensue from a combination of atmospheric phenomena, each possessing a variety of atmospheric constituents.

According to EM wave theory, certain characteristics of EM radiations 170, 172, and 174 may change when propagating through atmospheric medium 180. For example, according to Beer-Lambert-Bouguer law, part of the EM light radiation may be absorbed by the medium through which it is traveling. The amount of absorption depends on various variables, such as the type of the medium, and the optical thickness. Furthermore, EM radiations 170, 172, and 174 propagating through atmospheric medium 180 are subject to the effects of scattering such as Rayleigh scattering (i.e., occurring when light scatters off the molecules or particles in the air, approximately up to a tenth of the wavelength of the light) and Mie scattering (i.e., occurring when light scatters off larger molecules, such as aerosols and particulates). If the EM radiations scatter off atmospheric medium 180 predominately due to Mie scattering, (i.e., inelastic scattering), EM radiations 170, 172, and 174 are each changed in wavelength from each of those which were emitted, respectively, due to the wavelength dependence of scattering. Therefore, a decrease in radiant intensity (i.e., attenuation) in the amplitude of each of EM radiations 170, 172, and 174, and changes in the wavelengths, may occur as a result of absorption and scattering from atmospheric media 180.

Generally, EM radiation is scattered and absorbed differently while interacting with different types of atmospheric media 180. For example, the scattering from atmospheric medium 180, composed essentially from fog droplets, is substantially independent of wavelength (i.e., over the visible part of the EM spectrum), while the scattering from oil droplets is substantially dependent of wavelength. The different types of atmospheric media 180 may hereby be denoted via the designations "type I", "type II", "type III", and so forth. For example, atmospheric medium 180, of type I. consists, in essence, from dust particles, whereas atmospheric medium 180 of type II consists, in essence, from snow crystals. Spectral characteristic 224, in schematic plot 220 (Figure 2), denoted by a dotted line, represents the spectral characteristics of airfield light emitters 160 (Figure 1) of type "A" when detected through a particular type (i.e., type I) of atmospheric medium 180 possessing known properties (e.g., such as the refractive index) and under known environmental conditions (e.g., such as pressure, temperature, optical thickness). In a comparison between spectral emission characteristic 222 and spectral characteristic 224, it is evident that the latter is different with respect to the former. This phenomenon occurs as a result of the interaction of EM radiation 170 with atmospheric medium 180. Spectral characteristic 224 is shifted and also attenuated with respect to spectral emission characteristic 222. In particular, the two dominant peaks in spectral emission characteristic 222, occurring at approximately 450 and 550 nanometers are shifted to approximately 475 and 575 nanometers, respectively, as depicted in spectral characteristic 224.

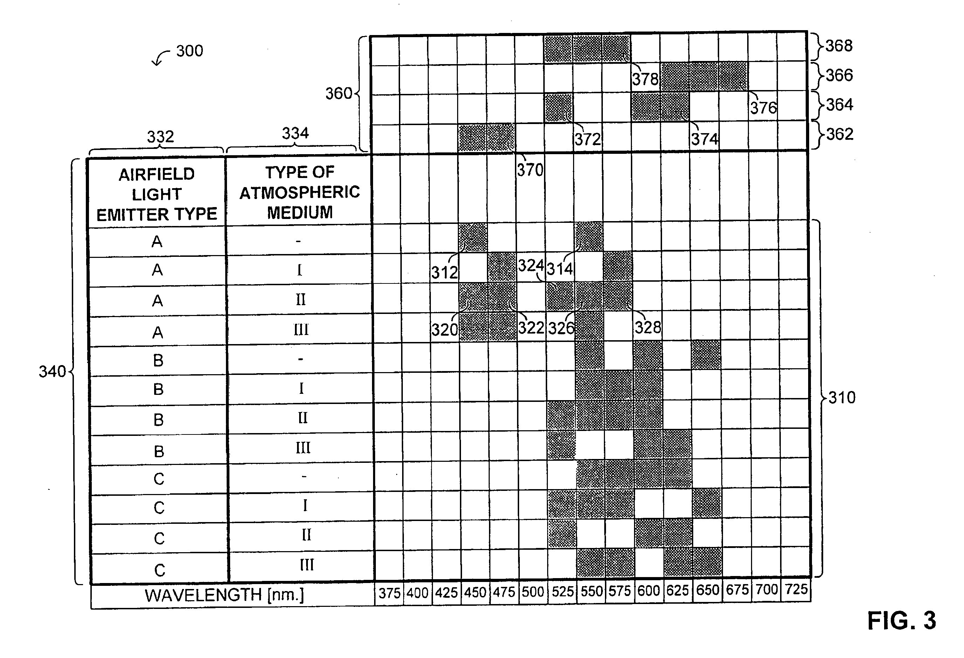

In an analogous manner, Figure 2 illustrates that spectral characteristic 244, in schematic plot 240, which is denoted by a dotted line, represents the spectral characteristics of airfield light emitters 162 (Figure 1) of type "B" when detected through a particular type (i.e., type I) of atmospheric medium 180 under known environmental conditions. Spectral characteristic 246, also in schematic plot 240, denoted by a dashed line, represents the spectral characteristics of airfield light emitters 162 when detected through atmospheric medium 180 of type III. Spectral characteristic 264, in schematic plot 260, which is denoted by a dotted line, represents the spectral characteristics of airfield light emitters 164 (Figure 1) of type "C" when detected through atmospheric medium 180 of type III under know environmental conditions. Spectral characteristic 266, also present in schematic plot 260, denoted by a dashed line, represents the spectral characteristics of airfield light emitters 164 when detected through atmospheric medium 180 of type IV (not shown in the schematic diagram of Figure 3).

System 100 has different modes of operation. According to one mode of operation, as will be described in detail below, system 100 detects EM radiation emanating from the airfield light emitters which has been modified as a result of the environment. In particular, system 100 detects EM radiations 170, 172, and 174 through atmospheric medium 180 in its myriad forms (i.e., spatial formations), constituents (i.e., chemical compositions) and manifestations (i.e., dynamics). EMCCD camera 102 is a high sensitivity, high speed imaging detector employing amplification, which produces images (not shown) of a scene (not shown) with a field of view (FOV) comparable with that, which has a pilot, gazing through the windshield or canopy of the aircraft (not shown). EMCCD camera 102 is a relatively wide spectrum camera (i.e., referred hereinafter as hyper-range), operative to sense EM radiation within the visible and near infrared (NIR) regions of the EM spectrum. In other words, EMCCD camera 102 acquires a hyper-range image of the external scene. Alternatively, EMCCD camera 102 is operative to sense other regions within the EM spectrum, such as ultraviolet (UV), short-wavelength infrared (SWIR), and the like. Further alternatively, EMCCD camera 102 can be substituted by other types of light intensifying cameras, each type employing different light intensifying techniques, such as those employed, for example, in NVDs, in active pixel sensors (APS), and the like.

Each one of the CCD cameras (i.e., CCD camera 104, CCD camera 106, CCD camera 108, and CCD camera 110) is a camera operative to sense EM radiation in a particular region of interest (ROI) within the EM spectrum, and to produce images (not shown), accordingly. Alternatively, one or more CCD cameras can each be operative to sense EM radiation in a plurality of wavebands (i.e., continuous, or discontinuous spectral bands) within the EM spectrum. Further alternatively, each camera can be constructed from elements which are sensitive to different spectral bands within the EM spectrum (i.e., each camera is characterized by a different spectral response curve). Further alternatively, each one of the CCD cameras can be substituted by other types of cameras, for example, those based on complementary metal oxide semiconductors (CMOS), and the like.

Each one of the optical spectral filters (i.e., optical spectral filter 114, optical spectral filter 116, optical spectral filter 118, and optical spectral filter 120) determines the ROI for each respective camera. Each one of the optical spectral filters is an optical band-pass filter that filters out substantially all wavelengths of EM radiation except for wavelengths in a particular range within the ROI. Alternatively, one or more of the optical spectral filters is an optical multi-band-pass filter, operative to filter out substantially all wavelengths of EM radiation, except for wavelengths from a plurality of respective spectral bands within the ROI. Further alternatively, each one of the optical spectral filters can be implemented in a filter wheel configuration (not shown). Further alternatively, each one of the optical spectral filters can be implemented using microelectromechanical systems (MEMS). It is noted that some cockpit windshields in some aircraft may incorporate filters to block particular spectral bands of the EM spectrum. System 100 takes into account the various optical filtering characteristics of these cockpit windshields.

The combined operation of CCD camera 104, CCD camera 106, CCD camera 108, and CCD camera 110 and their respective optical spectral filters is utilized to produce a multispectral image employed for the process of optimizing the recognition of the specific spectral emission characteristics of EM radiation, detected by these cameras, radiated from the different types of airfield light emitters. The multispectral image is composed from a datacube (not shown), consisting of a multi-dimensional array of data (i.e., a multi-dimensional set of spectral values).

Each pixel (i.e., a "hyper-pixel") in the multispectral image is effectively, a multi-dimensional array of spectral data. Moreover, these cameras with their respective optical spectral filters are further utilized for the process of optimizing the recognition of the spectral characteristics of these radiations through different types of atmospheric media 180. These particular spectral characteristics typically contain "spectral signatures". A spectral signature is a particular wavelength or combination of wavelengths of EM radiation, which can uniquely identify an object. For example, the spectral signature comprising the two dominant peaks in spectral emission characteristic 222, occurring at approximately 450 and 550 nanometers are employed to uniquely identify the type of source emitting the EM radiation (i.e., which in this case, is of type A"). Database 142 stores a plurality of unique spectral signatures of EM radiation 170, 172, and 174. Database 142 further stores a plurality of unique modified spectral signatures of EM radiation 170, 172, 174, as modified by different types of atmospheric media 180.

Reference is now further made to Figure 3, which is a schematic diagram, generally referenced 300, representing a spectral signature detection scheme based on a plurality of detectors, illustrating the dependency on particular atmospheric media. It is noted that Figure 3 represents only an example of a particular aspect of operation of the disclosed technique. This particular aspect of operation is described in terms and principles corresponding to those employed in finite state machines (FSM). It is stressed, however, that this particular aspect of operation is not limited by this particular type of representation, or any other types of representations.

The schematic diagram in Figure 3 includes three main sectors, data sector 310, source sector 340, and detection sector 360. Each of the sectors is sub-divided into a plurality of rows and a plurality of columns, thus forming grids. Data sector 310 is a representation of a multi-dimensional data set. Source sector 340 includes column 332 and column 334. Detection sector 360 includes row 362, row 364, row 366, and row 368. Column 332 tabulates different types of airfield light emitters (i.e., of types "A", "B", and "C"). Column 334 tabulates various types of atmospheric media 180 (i.e., of types I, II, III, and so forth).

The different rows in data sector 310 represent distribution of particular spectral characteristics (e.g., dominant spectral lines, spectral peaks) of the EM radiation of types "A", "B", and "C" of airfield light emitters in types I, II, III, of atmospheric media 180, as a function of the wavelength of the EM radiation, which is represented by the different columns. The wavelength is expressed in units of nanometers. Therefore, a shaded square in the grid of data sector 310 indicates that a particular type of airfield light emitter in a particular type of atmospheric medium 180 possesses particular spectral features at specific wavelengths. For example, Figure 3 illustrates that the EM radiation emitted by airfield light emitter 160 of type "A" possesses dominant spectral peaks at wavelengths of 450 and 550 nanometers, independent of atmospheric media 180. However, in the presence of an atmospheric medium 180 of type II, the detected EM radiation from airfield light emitters 160 possesses dominant spectral peaks at wavelengths of 450, 475, 525, 550, and 575 nanometers.

Therefore, in consideration with the simplified example above, the detection of dominant spectral peaks at 450 and 525 nanometers in the absence of an atmospheric medium 180 would indicate a spectral signature corresponding to airfield light emitters 160 of type "A". This spectral signature would consist of a dominant spectral peak 312, and a dominant spectral peak 314. The detection of dominant spectral peaks at wavelengths of 450, 475, 525, 550, and 575 nanometers would indicate a modified spectral signature corresponding to airfield light emitters 160 of type "A" in the presence of atmospheric medium 180 of type II. This modified spectral signature (i.e., modified by atmospheric medium 180 of type II) would consist of a dominant spectral peak 320, a dominant spectral peak 322, a dominant spectral peak 324, a dominant spectral peak 326, and a dominant spectral peak 328.

Database 142 (Figure 1) stores a plurality of these unique spectral signatures and modified spectral signatures of the EM radiation radiated from different types of airfield light emitters 170, 172, and 174, and different types of atmospheric media 180, as represented by data sector 310. It is noted that although the representations of the spectral peaks within data sector 310 are indicated by identical monochromatically shaded squares, database 142 typically assigns different values to each square, representing the different intensity values of the spectral characteristics. It is further noted that database 142 takes into account additional parameters (not shown in Figure 3) such as the influence of temperature, pressure, optical thickness, altitude of the aircraft, and the like.

Detection sector 360 illustrates a simplified representation of the spectral response of each of the CCD cameras with their respective optical spectral filters, as a function of the wavelength. Row 362 illustrates the spectral response of CCD camera 104 (Figure 1) operative with optical spectral filter 114 (Figure 1) to detect EM radiation, as a function of the wavelength. Therefore, according to detection sector 360, CCD camera 104 and spectral filter 114 possess the ability to detect EM radiation in a spectral detection band 370, which lies substantially between 450 and 475 nanometers. Camera 104 detects EM radiation within spectral detection band 370, impinging thereon, provided the EM radiation being of sufficient intensity, and produces an image (not shown), accordingly. In a similar manner, row 364 illustrates the spectral response of CCD camera 106 operative with optical spectral filter 116 to detect EM radiation, as a function of the wavelength, hence CCD camera 106 and spectral filter 116 possess the ability to detect EM radiation in dual spectral detection bands, namely, a spectral detection band 372 and a spectral detection band 374. Camera 106 detects EM radiation within spectral detection bands 372 and 374, impinging thereon, provided the EM radiation being of sufficient intensity, and produces an image (not shown), accordingly. Row 366 illustrates the spectral response of CCD camera 108 operative with optical spectral filter 118 to detect EM radiation, as a function of the wavelength. CCD camera 108 and spectral filter 118 possess the ability to detect EM radiation in a spectral detection band 376. Camera 108 detects EM radiation within spectral detection band 376, impinging thereon, provided the EM radiation being of sufficient intensity, and produces an image (not shown), accordingly. Row 368 illustrates the spectral response of CCD camera 110 operative with optical spectral filter 120 to detect EM radiation, as a function of the wavelength, therefore, CCD camera 110 and spectral filter 120 possess the ability to detect EM radiation in a spectral detection band 378. Camera 110 detects EM radiation within spectral detection band 378, impinging thereon, provided the EM radiation being of sufficient intensity, and produces an image (not shown), accordingly. It is noted that different spectral detection bands from different cameras may partially overlap, such as in the case of spectral detection band 374 and spectral detection band 376.

In order to detect the spectral signature of a particular type of airfield light emitter, through a particular type of atmospheric medium 180, the combined operation of the CCD cameras and their respective optical spectral filters is employed. Nonetheless, a situation where only one CCD camera is required for this purpose is also possible. For example, camera 104 with optical spectral filter 114, and camera 110 with optical spectral filter 120 are both required to detect the spectral signature corresponding to the EM radiation radiated by airfield light emitters 160 of type "A" through atmospheric medium 180 of type III. In another example, in order to detect the spectral signature corresponding to the EM radiation radiated by airfield light emitter 164 of type "C" through atmospheric medium 180 of type II, only one CCD camera is required, namely, camera 106 with optical spectral filter 116. Nevertheless, system 100, may employ two more cameras, namely camera 104 with optical spectral filter 114 and camera 110 with optical spectral filter 120, to enhance detection in regions where the spectral detection bands of the different cameras overlap, such as spectral detection band 372 with spectral detection band 378 at 525 nanometers, and spectral detection band 374 with spectral detection band 376 at 625 nanometers.

According to another embodiment of the disclosed technique the system includes a single camera, which is optically coupled with a plurality of optical filters, implemented in a filter wheel (not shown). In such an alternative operation, the filter wheel rotates, while the CCD camera acquires a plurality of images (not shown) each through a different optical filter of the filter wheel.

Each of image preprocessors 122, 124, 126, 128, and 130 (Figure 1) preprocesses each of the respective images, which are outputted from their respective camera (i.e., EMCCD camera 102, CCD camera 104, CCD camera 106, CCD camera 108, and CCD camera 110, respectively), prior to being each processed by processor 140, and produce preprocessed images. Image preprocessors 122, 124, 126, 128 and 130 employ techniques of digital image processing, such as feature extraction (e.g., extracting the features, such as pixel data relating to the position and intensity of the airfield light emitters within the images), homomorphic filtering for image enhancement, signal-to-noise (SNR) enhancement algorithms (i.e., for the enhancement of the images), and the like. Processor 140 processes the preprocessed images and employs multi-spectral algorithms. In particular, processor 140 determines which a combination (not shown) of spectral values of the multi-dimensional set of spectral values corresponds with distinct light emission characteristics of the airfield light emitters, by identifying a particular spectral signature corresponding to the multi-dimensional set of spectral values. Processor 140 then produces an enhanced image from those multi-dimensional set of spectral values corresponding to the determined combination.

Processor 140 can employ other digital image processing techniques which include thresholding techniques, time integration techniques, spatial high pass (HP) filtering, pattern recognition techniques including peak (light) pattern recognition, and the like. Pattern recognition techniques can include straight line pattern recognition, and circle pattern recognition for identifying the airfield light emitters, according to the total number of the detected airfield light emitters, as well as the mutual distances there between. Information regarding the characteristics of the airfield light emitters that are employed in airports can be found, for example in the U.S. Federal Aviation Administration (FAA) *"Specification for Runway and Taxiway Light Fixtures"* (AC No.: 150/5345-46), and in other related documents.

Database 142 stores the plurality of unique spectral signatures of EM radiation 170, 172, and 174 from different types of airfield light emitters employed at different airports around the world. In certain cases, however, database 142 might not have a unique spectral signature from a particular type of airfield light emitter, corresponding to the EM radiation detected by one or a combination of CCD cameras 102, 104, 106, and 108. In this mode of operation, system 100 (Figure 1) will still be able to function (i.e., to produce an enhanced image of the detected airfield radiation emitters), by employing digital image processing techniques (e.g., pattern recognition). For example, system 100 can employ analytical techniques in order to identify the spectral signatures of the airfield radiation emitters. Processor 140 can be programmed to search and to identify dominant peaks in the spectral emission characteristics of the airfield light emitters, according to an algorithm, an analytic formula, and the like. For example, processor 140 can be programmed to identify two dominant peaks, which are distanced apart along the EM spectrum by 34 nanometers, corresponding to a particular type of airfield light emitter through a particular type of atmospheric medium.

FMS 150 provides processor 140 with information regarding the position and bearing of the aircraft relative to a ground target (e.g., elevation, range from the runway). The elevation of the aircraft as well as the range from the runway can be used to estimate the optical thickness of atmospheric medium 180 (i.e., in real-time). Consequently, this is used in a calculation by processor 140 to estimate the wavelength dependence on the scattering of the EM radiations as a function of the current optical thickness of atmospheric medium 180. It is noted that system 100 can operate without requiring the use of FMS 150 of the aircraft (i.e., as a standalone system).

System 100 may employ image saturation management techniques, an example of which is given herein below. The phenomenon of saturation (i.e., or purity, the degree of difference from gray possessing the same lightness) can occur when an acquired image is overexposed, typically when the entire image, or a part thereof, exceeds the dynamic range of the camera that acquired the image. When one or more of EMCCD camera 102, CCD camera 104, CCD camera 116, CCD camera 118, and CCD camera 120 acquires a saturated image (not shown), processor 140 executes an automatic gain for saturation control (AGSC) algorithm, in order to control (e.g., reduce, minimize, eliminate) the effect of saturation. For example, processor 140, running the AGSC algorithm, can lower the gain (i.e., the level of amplification) of a particular camera in order to eliminate the effect of saturation in the images acquired by this camera.

In particular, as long as a certain saturation threshold value of a particular image, acquired from a particular camera, is not exceeded, processor 140 maintains a substantially high level of gain for that camera, in order to attain high expectation values for an image histogram (not shown) of that particular image. The saturation threshold value defines a value, substantially beyond which the effect of saturation of a particular image is substantially evident. An example of image saturation management is given below in Table 1.

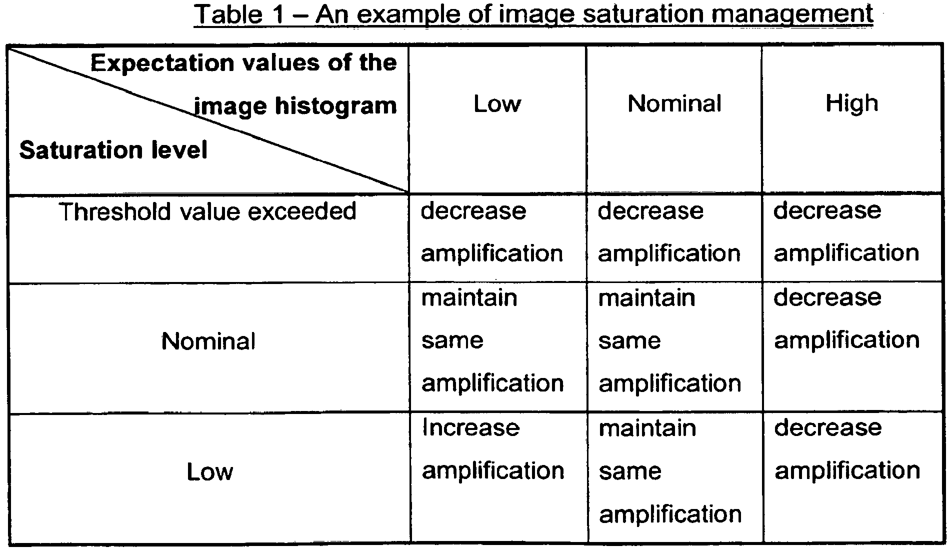

Table 1 illustrates, for example, that if a particular camera acquires an image having a saturation level that exceeds the threshold value while the expectation values of the image histogram of that image are low, processor 140, running the AGSC algorithm, decreases the amplification of that camera. If on the other hand, a particular camera acquires an image having a nominal saturation level (i.e., within a range of nominal saturation levels) while the expectation values of the image histogram of that image are low, processor 140 maintains the same level of amplification to that camera. It is further noted that system 100 can further employ histogram equalization techniques.

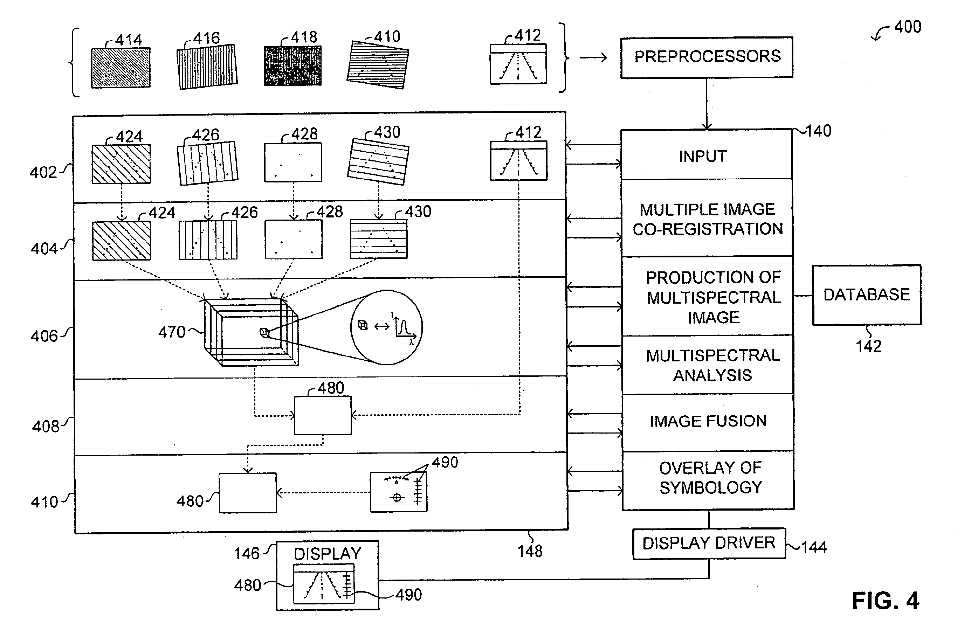

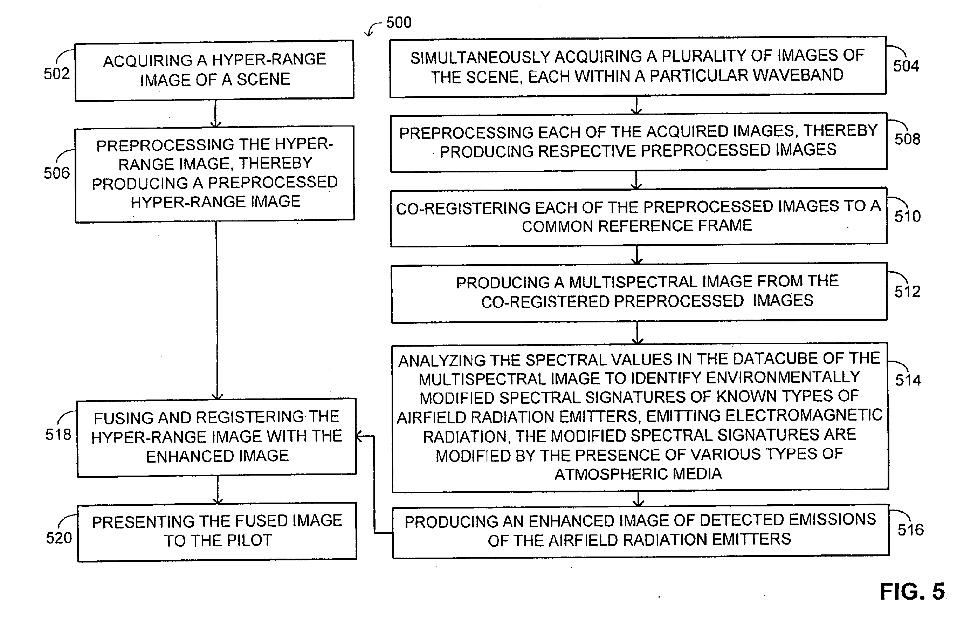

Reference is now further made to Figures 4 and 5. Figure 4 is a schematic block diagram, generally referenced 400, illustrating the generation of an enhanced image. Figure 5 is a schematic illustration of a method, generally referenced 500, for detecting different types of airfield radiation emitters within different types of atmospheric media. Figure 4 depicts illustrative representations of the various processes (i.e., stage 402, stage 404, stage 406, stage 408, and stage 410) of memory 148 of system 100 (Figure 1) at different instants of operation.

In procedure 502, a hyper-range image of a scene is acquired. With reference to Figures 1 and 4, EMCCD camera 102 (Figure 1) acquires a hyper-range image 412 (Figure 4) of a scene through the cockpit window (i.e., canopy, windshield) of the aircraft.

In procedure 504, a plurality of images of the scene are simultaneously acquired, each image being within a particular waveband. With reference to Figures 1 and 4, CCD camera 104, CCD camera 106, CCD camera 108, and CCD camera 110 (Figure 1) each simultaneously acquire a plurality of images 414, 416, 418, 418, and 420 (Figure 4), respectively, of the scene. These acquired images are from the scene that includes airfield light emitters 160, 162, and 164 (emitting EM radiations 170, 172, 174, respectively). It is noted that at least one acquired image corresponds to a particular one of the wavebands of airfield light emitters 160, 162, 164. It is further noted that procedures 502 and 504 may be executed simultaneously. In procedure 506, the hyper-range image is preprocessed, thereby producing a preprocessed hyper-range image. With reference to Figures 1 and 4, image preprocessor 122 (Figure 1) preprocesses hyper-range image 412 (Figure 4).

In procedure 508, each of the acquired images is preprocessed, thereby producing respective preprocessed images. With reference to Figures 1 and 4, image preprocessors 124, 126, 128, and 130 (Figure 1) each preprocess the image acquired by CCD camera 104, CCD camera 106, CCD camera 108, and CCD camera 110, respectively, thereby producing respective preprocessed images 424, 426, 428, and 430. In stage 402, memory 148 receives via processor 140, preprocessed image 424 from image preprocessor 124, preprocessed image 426 from image preprocessor 126, preprocessed image 428 from image preprocessor 128, preprocessed image 430 from image preprocessor 130, and preprocessed hyper-range image 412, from image preprocessor 122.

In procedure 510, the preprocessed images are co-registered to a common reference frame. With reference to Figures 1 and 4, processor 140 co-registers each of preprocessed images 424, 426, 428, and 430 into a common reference frame, in order to align the images taken from different viewpoints within the cockpit, so that all the corresponding points in each of the respective preprocessed images match. Memory 148 receives at stage 404, preprocessed images 424, 426, 428, and 430 which are co-registered.

In procedure 512, a multispectral image is produced from the co-registered preprocessed images. With reference to Figures 1 and 4, processor 140 produces multispectral image 470 from preprocessed images 424, 426, 428, and 430, which are preprocessed and co-registered. Memory 148 receives multispectral image 470 in stage 406. Multispectral image 470 (i.e., of the scene that includes airfield light emitters 160, 162, and 164) includes a multi-dimensional set of spectral values (not shown).

In procedure 514 the spectral values in the datacube of the multispectral image are analyzed to identify environmentally modified spectral signatures of known types of airfield radiation emitters, emitting EM radiation, the modified spectral signatures are modified in the presence of various types of atmospheric media. Particularly, with reference to Figure 1, spectral signatures of airfield light emitters 160, 162, and 164 are identified from a combination (not shown) of spectral values in the multi-dimensional set of spectral values corresponding to the respective light emission characteristics of the airfield light emitters. It is noted that spectral signatures that have not been environmentally modified can also be identified.

In procedure 516, an enhanced image of the detected emission of the airfield radiation emitters is produced. Particularly, the enhanced image is produced according to those spectral values in the multi-dimensional set of spectral values corresponding to the combination. The procedure involves the detection and recognition of only EM radiation, which is emitted by a particular type of airfield light emitter through a particular type of atmospheric medium, characterized by specific spectral characteristics, while rejecting undesirables, such as noise, which is characterized by other characteristics. With reference to Figures 1, 3, and 4, processor 140 compares every pixel in the datacube of multispectral image 470, containing detected values of illumination (i.e., possessing particular characteristics) with corresponding values in database 142. Processor 140 identifies which of CCD cameras 114, 116, 118, and 120 are involved in the detection of the particular type of airfield light emitter through a particular type of atmospheric medium, from the individual contributions of corresponding respective images 424, 426, 428, and 430 that make up multispectral image 470, according to the spectral signature detection scheme described in Figure 3. If particular features (i.e., or combination thereof), such as spectral signatures present in datacube corresponding to a particular pixel in multispectral image 470) in the possess characteristics that match the corresponding spectral signatures in database 142, then these features are constructively combined by processor 140 in order to enhance these features. Processor 140 produces an enhanced image 480 from these features. Conversely, features that do not match the spectral signatures in database 142 are marked as noise and the corresponding pixel data within the datacube of multispectral image 470 are rejected from enhanced image 480.

In procedure 518, the hyper-range image is registered and fused with the enhanced image. With reference to Figures 1 and 4, processor 140 fuses hyper-range image 412, with enhanced image 470, and produces a fused image 480. Memory 148 receives fused image 480 from processor 140 at stage 408.

In procedure 520 the fused image is presented to the pilot. With reference to Figures 1 and 4, display driver 144 receives fused image 480 from processor 140, and directs display 146 to display fused image 480 of the external scene, including the runway lights. It is noted that display 146 can be a head-up display (HUD), a head-down display (HDD), a video screen, computer monitor, video projector, and the like.

It is further noted that processor 140 can produce symbology 490, and overlay symbology 490 on fused image 480. Examples of symbology 490 include a flight path vector (FPV), a boresight symbol, an acceleration indicator, and the like. The overlay of symbology 490 on enhanced multispectral image 480 is stored in real-time in memory 148, illustrated in stage 410.

According to another mode of operation of system 100, is the case where only one of CDD cameras 104, 106, 108, and 110 detects the EM radiation emanating from the airfield light emitters. In this case, system 100 produces enhanced multispectral image 480 relying on the image produced by the respective camera involved in the detection.

According to a further mode of operation of system 100, is the case where none of CCD cameras 104, 106, 108, and 110 detect the EM radiation emanating from the airfield light emitters. In this case, hyper-range image 460 of the external scene, produced by EMCCD camera 102 is employed, whereas enhanced image 480 is not produced.

It will be appreciated by persons skilled in the art that the disclosed technique is not limited to what has been particularly shown and described hereinabove. Rather the scope of the disclosed technique is defined only by the claims, which follow.

## Claims

1. Apparatus (100) for detecting airfield light emitters (160, 162, 164), the apparatus comprising:
a plurality of light detection cameras (104, 106, 108, 110), each detecting at least one respective waveband of electromagnetic radiation (170, 172, 174) within the electromagnetic spectrum, each of said light detection cameras producing a plurality of respective spectral images (414, 416, 418, 420); and
a processor (140), coupled with said light detection cameras, **characterized in that** said processor: generates a multispectral image (470) of said airfield light emitters from said spectral images, said multispectral image comprising a multi-dimensional set of spectral values,
further determines for at least one part in said multispectral image, which combination of spectral values in said multi-dimensional set of spectral values corresponds with a plurality of distinct light emission characteristics of said airfield light emitters, by identifying a particular spectral signature corresponding to said multi-dimensional set of spectral values of said airfield light emitters, and
produces an enhanced image (480) from those said spectral values of said multi-dimensional set of spectral values which correspond to said determined combination.

2. Apparatus (100) for detecting airfield light emitters (160, 162, 164), the apparatus comprising:
at least one light detection camera (104, 106, 108, 110), at least one of said at least one light detection camera detecting a plurality of respective wavebands of electromagnetic radiation (170, 172, 174) within the electromagnetic spectrum, each of said at least one light detection camera producing respective spectral images (414, 416, 418, 420) according to the corresponding wavebands thereof; and
a processor (140), coupled with said at least one light detection camera,
**characterized in that** said processor: generates a multispectral image (470) of said airfield light emitters from said respective spectral images, said multispectral image comprising a multi-dimensional set of spectral values,
further determines for at least one part in said multispectral image, which combination of spectral values in said multi-dimensional set of spectral values, corresponds with a plurality of distinct light emission characteristics of said airfield light emitters, by identifying a particular spectral signature corresponding to said multi-dimensional set of spectral values of said airfield light emitters, and
produces an enhanced image (480) from those said spectral values of said multi-dimensional set of spectral values which correspond to said determined combination.

3. The apparatus according to claims 1 and 2, wherein said part includes at least one pixel.

4. The apparatus according to claim 1, further comprising a plurality of optical filters, each associated with a respective one of said at least one waveband, each of said optical filters optically coupled with a respective one of said light detection cameras.

5. The apparatus according to either of claims 1 and 2, further comprising a database, for storing a plurality of spectral signatures, each one of said plurality of spectral signatures being unique for a particular type of airfield light emitter and for a particular set of environmental conditions.

6. The apparatus according to claim 5, whereby said processor compares said multi-dimensional set of spectral values to said plurality of spectral signatures stored in said database.

7. The apparatus according to claim 5, wherein said plurality of spectral signatures are dependent on a particular atmospheric medium.

8. The apparatus according to either of claims 1 and 2, further comprising a wide spectrum camera, coupled with said processor, for generating a hyper-range image of said airfield light emitters and a scene in which said airfield light emitters are located in.

9. The apparatus according to claim 8, wherein said wide spectrum camera is an electron-multiplying charged coupled device camera.

10. The apparatus according to claim 8, further comprising an image preprocessor, coupled between said wide spectrum camera and said processor, for preprocessing said hyper-range image.

11. The apparatus according to claim 8, wherein said processor combines said hyper-range image with said enhanced image.

12. The apparatus according to either of claims 1 and 2, wherein said apparatus is coupled inside a cockpit of an aircraft.

13. The apparatus according to either of claims 1 and 2, wherein said multi-dimensional set of spectral values is stored as a datacube.

14. The apparatus according to either of claims 1 and 2, wherein said processor determines type of said airfield light emitter corresponding to said airfield light emitters and particular set of environmental conditions in which said airfield light emitters are located in, according to identified said particular spectral signature.

15. The apparatus according to either claims 1 and 2, further comprising a flight management system, coupled with said processor, for providing said processor with information regarding the position and the bearing of an aircraft incorporating said apparatus, relative to a ground target.

16. The apparatus according to claim 2, further comprising at least one optical filter, said at least one optical filter optically coupled with respective one of said at least one light detection camera.

17. The apparatus according to claim 1, further comprising at least one optical filter, said at least one optical filter optically coupled with respective one of said plurality of light detection cameras.

18. The apparatus according to either of claims 16 and 17, wherein said at least one optical filter is an optical multi-band-pass filter.

19. Method (500) for detecting airfield light emitters (160, 162, 164), the airfield light emitters having respective light emission characteristics (222, 242, 262), the method comprising the procedures of:
acquiring a plurality of spectral images (414, 416, 418, 420) from electromagnetic radiation emitted (170, 172, 174) from said airfield light emitters in a plurality of wavebands within the electromagnetic spectrum, each of said at least one spectral image corresponding to a particular one of said plurality of wavebands;
said method being **characterized by** the steps of:
generating a multispectral image (470) of said airfield light emitters from said spectral images, said multispectral image comprising a multi-dimensional set of spectral values; and:
identifying, for at least one part in said multispectral image, a particular spectral signature of said airfield light emitters, from a combination of spectral values in a multi-dimensional set of spectral values, corresponding to said respective light emission characteristics.

20. The method according to claim 19, wherein said part includes at least one pixel.

21. The method according to claim 19, further comprising the procedure of generating an enhanced image from those said spectral values in said multi-dimensional set of spectral values corresponding to said combination.

22. The method according to claim 19, further comprising the procedure of storing a plurality of spectral signatures, each of said spectral signatures being unique for a particular type of said airfield light emitter and for a particular set of environmental conditions.

23. The method according to claim 22, further comprising the procedure of comparing said multi-dimensional set of spectral values to stored said spectral signatures.

24. The method according to claim 19, further comprising the procedures of:
detecting electromagnetic radiation emitted from a scene in which said airfield light emitters are located in; and
generating a hyper-range image of said airfield light emitters and said scene in which said airfield light emitters are located in, from detected said electromagnetic radiation emitted from said scene.

25. The method according to claim 24, further comprising the procedure of combining said hyper-range image with said enhanced image.

26. The method according to claim 19, wherein said multi-dimensional set of spectral values is stored as a datacube.

27. The method according to claim 22, further comprising the procedure of determining said particular type of said airfield light emitter corresponding to said airfield light emitters and the particular set of environmental conditions in which said airfield light emitters are located in, according to identified said particular spectral signature.

## Patentansprüche

1. Gerät (100) zum Erfassen von Flugfeld-Lichtemittern (160, 162, 164), wobei das Gerät Folgendes umfasst:
eine Vielzahl von Lichterfassungskameras (104, 106, 108, 110), die jeweils mindestens ein jeweiliges Wellenband von elektromagnetischer Strahlung (170, 172, 174) innerhalb des elektromagnetischen Spektrums erfassen, wobei jede der Lichterfassungskameras eine Vielzahl von jeweiligen Spektralbildern (414, 416, 418, 420) erzeugt; und
einen Prozessor (140), der mit den Lichterfassungskameras gekoppelt ist,
**dadurch gekennzeichnet, dass** der Prozessor:
aus den Spektralbildern ein multispektrales Bild (470) der Flugfeld-Lichtemitter generiert, wobei das multispektrale Bild einen multidimensionalen Satz von Spektralwerten umfasst,
ferner für mindestens einen Teil in dem multispektralen Bild bestimmt, welche Kombination von Spektralwerten in dem multidimensionalen Satz von Spektralwerten einer Vielzahl von unterschiedlichen Lichtemissionscharakteristiken der Flugfeld-Lichtemitter entspricht, indem er eine bestimmte Spektralsignatur identifiziert, die dem multidimensionalen Satz von Spektralwerten der Flugfeld-Lichtemitter entspricht, und
ein verbessertes Bild (480) aus denjenigen der Spektralwerte des multidimensionalen Satzes von Spektralwerten erzeugt, die der bestimmten Kombination entsprechen.

2. Gerät (100) zum Erfassen von Flugfeld-Lichtemittern (160, 162, 164), wobei das Gerät Folgendes umfasst:
mindestens eine Lichterfassungskamera (104, 106, 108, 110), wobei mindestens eine der mindestens einen Lichterfassungskamera eine Vielzahl von jeweiligen Wellenbändern von elektromagnetischer Strahlung (170, 172, 174) in dem elektromagnetischen Spektrum erfasst, wobei jede der mindestens einen Lichterfassungskamera jeweilige Spektralbilder (414, 416, 418, 420) gemäß ihren entsprechenden Wellenbändern erzeugt; und
einen Prozessor (140), der mit der mindestens einen Lichterfassungskamera gekoppelt ist,
**dadurch gekennzeichnet, dass** der Prozessor:
aus den Spektralbildern ein multispektrales Bild (470) der Flugfeld-Lichtemitter generiert, wobei das multispektrale Bild einen multidimensionalen Satz von Spektralwerten umfasst,
ferner für mindestens einen Teil in dem multispektralen Bild bestimmt, welche Kombination von Spektralwerten in dem multidimensionalen Satz von Spektralwerten einer Vielzahl von unterschiedlichen Lichtemissionscharakteristiken der Flugfeld-Lichtemitter entspricht, indem er eine bestimmte Spektralsignatur identifiziert, die dem multidimensionalen Satz von Spektralwerten der Flugfeld-Lichtemitter entspricht, und
ein verbessertes Bild (480) aus denjenigen der Spektralwerte des multidimensionalen Satzes von Spektralwerten erzeugt, die der bestimmten Kombination entsprechen.

3. Gerät nach Anspruch 1 und 2, wobei der Teil mindestens ein Pixel umfasst.

4. Gerät nach Anspruch 1, ferner umfassend eine Vielzahl von optischen Filtern, die jeweils mit einem jeweiligen des mindestens einen Wellenbandes verknüpft sind, wobei jeder der optischen Filter optisch mit einer jeweiligen der Lichterfassungskameras gekoppelt ist.

5. Gerät nach einem der Ansprüche 1 und 2, ferner umfassend eine Datenbank zum Speichern einer Vielzahl von Spektralsignaturen, wobei jede der Vielzahl von Spektralsignaturen für eine bestimmte Art von Flugfeld-Lichtemitter und für einen bestimmten Satz von Umweltbedingungen einzigartig ist.

6. Gerät nach Anspruch 5, wobei der Prozessor den multidimensionalen Satz von Spektralwerten mit der Vielzahl von Spektralsignaturen vergleicht, die in der Datenbank gespeichert sind.

7. Gerät nach Anspruch 5, wobei die Vielzahl von Spektralsignaturen von einem bestimmten atmosphärischen Medium abhängig ist.

8. Gerät nach einem der Ansprüche 1 und 2, ferner umfassend eine Breitspektrumkamera, die mit dem Prozessor gekoppelt ist, um ein Hyperbereichsbild der Flugfeld-Lichtemitter und eine Szene, in der sich die Flugfeld-Lichtemitter befinden, zu generieren.

9. Gerät nach Anspruch 8, wobei die Breitspektrumkamera eine Ladungskopplungsspeicher-Kamera mit Elektronenvervielfacher ist.

10. Gerät nach Anspruch 8, ferner umfassend einen Bildpräprozessor, der zwischen der Breitspektrumkamera und dem Prozessor gekoppelt ist, um das Hyperbereichsbild vorzubereiten.

11. Gerät nach Anspruch 8, wobei der Prozessor das Hyperbereichsbild mit dem verbesserten Bild kombiniert.

12. Gerät nach einem der Ansprüche 1 und 2, wobei das Gerät in einem Cockpit eines Luftfahrzeugs gekoppelt ist.

13. Gerät nach einem der Ansprüche 1 und 2, wobei der multidimensionale Satz von Spektralwerten in einem Datenwürfel gespeichert ist.

14. Gerät nach einem der Ansprüche 1 und 2, wobei der Prozessor die Art des Flugfeld-Lichtemitters, die den Flugfeld-Lichtemittern und dem bestimmten Satz von Umweltbedingungen entspricht, unter denen sich die Flugfeld-Lichtemitter befinden, gemäß der identifizierten bestimmten Spektralsignatur bestimmt.

15. Gerät nach einem der Ansprüche 1 und 2, ferner umfassend ein Flugverwaltungssystem, das mit dem Prozessor gekoppelt ist, um dem Prozessor Informationen über die Position und die Peilung eines Luftfahrzeugs, in welches das Gerät eingebaut ist, mit Bezug auf ein Bodenziel bereitzustellen.

16. Gerät nach Anspruch 2, ferner umfassend mindestens ein optisches Filter, wobei das mindestens eine optische Filter mit jeweils einer der mindestens einen Lichterfassungskamera optisch gekoppelt ist.

17. Gerät nach Anspruch 1, ferner umfassend mindestens ein optisches Filter, wobei das mindestens eine optische Filter mit einer jeweiligen der Vielzahl von Lichterfassungskameras optisch gekoppelt ist.

18. Gerät nach einem der Ansprüche 16 und 17, wobei das mindestens eine optische Filter ein optisches Mehrbandpassfilter ist.

19. Verfahren (500) zum Erfassen von Flugfeld-Lichtemittern (160, 162, 164), wobei die Flugfeld-Lichtemitter jeweilige Lichtemissionscharakteristiken (222, 242, 262) aufweisen, wobei das Verfahren folgende Vorgänge umfasst:
Erfassen einer Vielzahl von Spektralbildern (414, 416, 418, 420) aus einer elektromagnetischen Strahlung (170, 172, 174), die von den Flugfeld-Lichtemittern in einer Vielzahl von Wellenbändern in dem elektromagnetischen Spektrum emittiert wird, wobei jedes des mindestens einen Spektralbildes einem von der Vielzahl von Wellenbändern entspricht;
wobei das Verfahren durch folgende Schritte gekennzeichnet ist:
Generieren eines multispektralen Bildes (470) der Flugfeld-Lichtemitter aus den Spektralbildern, wobei das multispektrale Bild einen multidimensionalen Satz von Spektralwerten umfasst; und
für mindestens einen Teil in dem multispektralen Bild, Identifizieren einer bestimmten Spektralsignatur der Flugfeld-Lichtemitter aus einer Kombination von Spektralwerten in einem multidimensionalen Satz von Spektralwerten, die den jeweiligen Lichtemissionscharakteristiken entsprechen.

20. Verfahren nach Anspruch 19, wobei der Teil mindestens ein Pixel umfasst.

21. Verfahren nach Anspruch 19, ferner umfassend den Vorgang des Generierens eines verbesserten Bildes aus den Spektralwerten in dem multidimensionalen Satz von Spektralwerten, die der Kombination entsprechen.

22. Verfahren nach Anspruch 19, ferner umfassend den Vorgang des Speicherns einer Vielzahl von Spektralsignaturen, wobei jede der Spektralsignaturen für eine bestimmte Art des Flugfeld-Lichtemitters und für einen bestimmten Satz von Umweltbedingungen einzigartig ist.

23. Verfahren nach Anspruch 22, ferner umfassend den Vorgang des Vergleichens des multidimensionalen Satzes von Spektralwerten mit den gespeicherten Spektralsignaturen.

24. Verfahren nach Anspruch 19, ferner umfassend folgende Vorgänge:
Erfassen einer elektromagnetischen Strahlung, die von einer Szene emittiert wird, in der sich die Flugfeld-Lichtemitter befinden; und
Generieren eines Hyperbereichsbildes der Flugfeld-Lichtemitter und der Szene, in der sich die Flugfeld-Lichtemitter befinden, aus der erkannten elektromagnetischen Strahlung, die von der Szene emittiert wird.

25. Verfahren nach Anspruch 24, ferner umfassend den Vorgang des Kombinierens des Hyperbereichsbildes mit dem verbesserten Bild.

26. Verfahren nach Anspruch 19, wobei der multidimensionale Satz von Spektralwerten als Datenwürfel gespeichert wird.

27. Verfahren nach Anspruch 22, ferner umfassend den Vorgang des Bestimmens der bestimmten Art des Flugfeld-Lichtemitters, der den Flugfeld-Lichtemittern und dem bestimmten Satz von Umweltbedingungen entspricht, unter denen sich die Flugfeld-Lichtemitter befinden, gemäß der identifizierten bestimmten Spektralsignatur.

## Revendications

1. Appareil (100) servant à détecter des émetteurs de feux d'aérodrome (160, 162, 164), l'appareil comprenant :
une pluralité de caméras de détection lumineuse (104, 106, 108, 110), chacune détectant au moins une bande de fréquences respective de rayonnement électromagnétique (170, 172, 174) au sein du spectre électromagnétique, chacune desdites caméras de détection lumineuse produisant une pluralité d'images spectrales respectives (414, 416, 418, 420) ; et
un processeur (140) couplé avec lesdites caméras de détection lumineuse, **caractérisé en ce que** ledit processeur produit une image multispectrale (470) desdits émetteurs de feux d'aérodrome à partir desdites images spectrales, ladite image multispectrale comprenant un ensemble multidimensionnel de valeurs spectrales, détermine en outre au moins une partie dans ladite image multispectrale, laquelle combinaison de valeurs spectrales dans ledit ensemble multispectral de valeurs spectrales correspond à une pluralité de caractéristiques distinctes d'émission lumineuse desdits émetteurs de feux d'aérodrome, par identification d'une signature spectrale particulière correspondant audit ensemble multidimensionnel de valeurs spectrales desdits émetteurs de feux d'aérodrome, et
produit une image améliorée (480) à partir des valeurs spectrales dudit ensemble multidimensionnel de valeurs spectrales qui correspondent à ladite combinaison déterminée.

2. Appareil (100) servant à détecter des émetteurs de feux d'aérodrome (160, 162, 164), l'appareil comprenant :
au moins une caméra de détection lumineuse (104, 106, 108, 110), au moins une desdites au moins une caméra de détection lumineuse détectant un ensemble de bandes de fréquences respectives de rayonnement électromagnétique (170, 172, 174) au sein du spectre électromagnétique, chacune desdites au moins une caméra de détection lumineuse produisant des images spectrales respectives (414, 416, 418, 420) selon les bandes correspondantes de fréquences de celles-ci ; et
un processeur (140) couplé à ladite au moins une caméra de détection lumineuse, **caractérisé en ce que** ledit processeur produit une image multispectrale (470) desdits émetteurs de feux d'aérodrome à partir desdites images spectrales, ladite image multispectrale comprenant un ensemble multidimensionnel de valeurs spectrales, détermine en outre au moins une partie dans ladite image multispectrale, laquelle combinaison de valeurs spectrales dans ledit ensemble multispectral de valeurs spectrales correspond à une pluralité de caractéristiques distinctes d'émission lumineuse desdits émetteurs de feux d'aérodrome, par identification d'une signature spectrale particulière correspondant audit ensemble multidimensionnel de valeurs spectrales desdits émetteurs de feux d'aérodrome, et
produit une image améliorée (480) à partir des valeurs spectrales dudit ensemble multidimensionnel de valeurs spectrales qui correspondent à ladite combinaison déterminée.

3. Appareil selon les revendications 1 et 2, dans lequel ladite partie comprend au moins un pixel.

4. Appareil selon la revendication 1, comprenant en outre un ensemble de filtres optiques, chacun étant associé à une bande de fréquences respective desdites au moins une bande, chacun desdits filtres optiques étant couplé optiquement à une caméra de détection lumineuse respective desdites caméras.

5. Appareil selon l'une des revendications 1 et 2, comprenant en outre une base de données, qui permet de stocker une pluralité de signatures spectrales, chacune desdites signatures spectrales étant unique pour un type particulier d'émetteur de feux d'aérodrome pour un ensemble particulier de conditions environnementales.

6. Appareil selon la revendication 5, tel que ledit processeur compare ledit ensemble multidimensionnel de valeurs spectrales à ladite pluralité de signatures spectrales stockée dans ladite base de données.

7. Appareil selon la revendication 5, dans lequel ladite pluralité de signatures spectrales dépend d'un milieu atmosphérique particulier.

8. Appareil selon l'une des revendications 1 et 2, comprenant en outre une caméra à spectre large couplée audit processeur, pour produire une image hypergamme desdits émetteurs de feux d'aérodrome et une scène dans laquelle se trouvent lesdits émetteurs de feux d'aérodrome.

9. Appareil selon la revendication 8, dans lequel ladite caméra à spectre large est une caméra à dispositif de charge couplée à multiplication d'électrons.

10. Appareil selon la revendication 8, comprenant en outre un préprocesseur d'image, couplé entre la caméra à spectre large et ledit processeur, afin de prétraiter ladite image hypergamme.

11. Appareil selon la revendication 8, dans lequel ledit processeur combine ladite image hypergamme à ladite image améliorée.

12. Appareil selon l'une des revendications 1 et 2, dans lequel ledit appareil est couplé à l'intérieur d'un cockpit d'un aéronef.

13. Appareil selon l'une des revendications 1 et 2, dans lequel ledit ensemble multidimensionnel de valeurs spectrales est stocké sous la forme d'un hypercube.

14. Appareil selon l'une des revendications 1 et 2, dans lequel ledit processeur détermine le type dudit émetteur de feux d'aérodrome correspondant auxdits émetteurs de feux d'aérodrome et à l'ensemble particulier de conditions environnementales dans lesquelles se trouvent lesdits émetteurs de feux d'aérodrome, selon l'identification de ladite signature spectrale particulière.

15. Appareil selon l'une des revendications 1 et 2, comprenant en outre un système de gestion de vol, couplé audit processeur, afin de transmettre jusqu'audit processeur les informations concernant la position et le port d'un aéronef incorporant ledit appareil, par rapport à une cible située au sol.

16. Appareil selon la revendication 2, comprenant en outre au moins un filtre optique, ledit au moins un filtre optique étant couplé optiquement à une caméra respective de détection lumineuse parmi lesdites au moins une caméra.

17. Appareil selon la revendication 1, comprenant en outre au moins un filtre optique, ledit au moins un filtre optique étant couplé optiquement à une caméra respective de détection lumineuse parmi ladite pluralité de caméras.

18. Appareil selon l'une des revendications 16 et 17, dans lequel ledit au moins un filtre optique est un filtre optique passant multibande.

19. Procédé (500) de détection d'émetteurs de feux d'aérodrome (160, 162, 164), les émetteurs de feux d'aérodrome présentant des caractéristiques respectives d'émission lumineuse (222, 242, 262), ce procédé comprenant les procédures suivantes :
acquisition d'une pluralité d'images spectrales (414, 416, 418, 420) à partir du rayonnement électromagnétique émis (170, 172, 174) à partir desdits émetteurs de feux d'aérodrome dans une pluralité de bandes de fréquences du spectre électromagnétique, chacune desdites images spectrales parmi l'au moins une image correspondant à une image particulière de ladite pluralité de bandes de fréquences ;
ce procédé étant **caractérisé par** les étapes suivantes : production d'une image multispectrale (470) desdits émetteurs de feux d'aérodrome à partir desdites images spectrales, ladite image multispectrale comprenant un ensemble multidimensionnel de valeurs spectrales ; et
identification, pour au moins une partie dans ladite image multispectrale, d'une signature spectrale particulière desdits émetteurs de feux d'aérodrome, à partir d'une combinaison de valeurs spectrales dans un ensemble multidimensionnel de valeurs spectrales, correspondant aux dites caractéristiques respectives d'émission lumineuse.

20. Procédé selon la revendication 19, dans lequel ladite partie comprend au moins un pixel.

21. Procédé selon la revendication 19, comprenant en outre la procédure de production d'une image améliorée à partir desdites valeurs spectrales dudit ensemble multidimensionnel de valeurs spectrales correspondant à ladite combinaison.

22. Procédé selon la revendication 19, comprenant en outre la procédure de stockage d'une pluralité de signatures spectrales, chacune desdites signatures spectrales étant unique pour un type particulier d'émetteur de feux d'aérodrome et pour un ensemble particulier de conditions environnementales.

23. Procédé selon la revendication 22, comprenant en outre la procédure de comparaison dudit ensemble multidimensionnel de valeurs spectrales aux dites signatures spectrales enregistrées.

24. Procédé selon la revendication 19, comprenant en outre les procédures suivantes :
détection d'un rayonnement électromagnétique émis à partir d'une scène dans laquelle se trouvent lesdits émetteurs de feux d'aérodrome ; et
production d'une image hypergamme desdits émetteurs de feux d'aérodrome et de ladite scène dans laquelle se trouvent lesdits émetteurs de feux d'aérodrome, à partit dudit rayonnement électromagnétique détecté, émis à partir de ladite scène.

25. Procédé selon la revendication 24, comprenant en outre la procédure de combinaison de ladite image hypergamme avec ladite image améliorée.

26. Procédé selon la revendication 19, dans lequel ledit ensemble multidimensionnel de valeurs spectrales est enregistré sous la forme d'hypercube.

27. Procédé selon la revendication 22, comprenant en outre la procédure de détermination dudit type particulier dudit émetteur de feux d'aérodrome correspondant aux dits émetteurs de feux d'aérodrome et à l'ensemble particulier de conditions environnementales dans lesquelles se trouvent lesdits émetteurs de faux d'aérodrome, selon l'identification de ladite signature spectrale particulière.
